# EUROPEAN PATENT SPECIFICATION

(11) **EP 4 584 983 B1**
(45) Date of publication and mention of the grant of the patent: **10.12.2025**
(21) Application number: 22783588.1
(22) Date of filing: 06.09.2022
(51) Int. Cl.: H04W 16/18, G06N 20/00

(54) **METHOD AND APPARATUS FOR NETWORK COVERAGE CONFIGURATION**
VERFAHREN UND VORRICHTUNG ZUR NETZABDECKUNGSKONFIGURATION
MÉTHODE ET APPAREIL POUR LA CONFIGURATION DE LA COUVERTURE DU RÉSEAU

(43) Date of publication of application: 16.07.2025
(73) Proprietor: Telefonaktiebolaget LM Ericsson (publ), 164 83 Stockholm (SE)
(72) Inventor: SZABÓ, Géza, 6000 KECSKEMÉT (HU); PET , József, 3400 MEZÖKÖVESD (HU)
(74) Representative: Ericsson
(86) International application number: PCT/SE2022/050788
(87) International publication number: WO 2024/054135

(56) References cited:
- WO-A1-2022/123292
- CN-A- 109 961 098
- CN-A- 114 004 355
- WANG TIANYING ET AL: "Efficient Robotic Task Generalization Using Deep Model Fusion Reinforcement Learning", 2019 IEEE INTERNATIONAL CONFERENCE ON ROBOTICS AND BIOMIMETICS (ROBIO), IEEE, 6 December 2019 (2019-12-06), pages 148 - 153, XP033691445, [retrieved on 20200116], DOI: 10.1109/ROBIO49542.2019.8961391
- KONSTANTINOS CHATZILYGEROUDIS ET AL: "Quality-Diversity Optimization: a novel branch of stochastic optimization", ARXIV.ORG, CORNELL UNIVERSITY LIBRARY, 201 OLIN LIBRARY CORNELL UNIVERSITY ITHACA, NY 14853, 8 December 2020 (2020-12-08), XP081833111
- "3rd Generation Partnership Project; Technical Specification Group Services and System Aspects; Study on traffic characteristics and performance requirements for AI/ML model transfer in 5GS (Release 18)", no. V18.2.0, 24 December 2021 (2021-12-24), pages 1 - 111, XP052083489, Retrieved from the Internet <URL:https://ftp.3gpp.org/Specs/archive/22_series/22.874/22874-i20.zip 22874-i20.doc> [retrieved on 20211224]
- "WD/CD/DIS/FDIS stage;I-007_att3", vol. net-2030, 12 June 2019 (2019-06-12), pages 1 - 260, XP044267694, Retrieved from the Internet <URL:https://extranet.itu.int/sites/itu-t/focusgroups/net-2030/liaison/NET2030-I-LS-007.zip NET2030-I-007_att3.pdf> [retrieved on 20190612]
- ERICSSON: "General aspects of AI PHY", vol. RAN WG1, no. Online; 20220516 - 20220527, 29 April 2022 (2022-04-29), XP052152908, Retrieved from the Internet <URL:https://ftp.3gpp.org/tsg_ran/WG1_RL1/TSGR1_109-e/Docs/R1-2203280.zip R1-2203280 General aspects of AI PHY.docx> [retrieved on 20220429]

## Description

### Technical Field

Embodiments described herein relate to a method and apparatus for network coverage configuration, in particular for utilising Machine Learning (ML) to assist in the configuration of network coverage.

### Background

Networks, such as 3^{rd} Generation Partnership Project (3GPP) 5^{th} Generation (5G) telecommunications networks, 3GPP 6^{th} Generation (6G) telecommunications networks, Institute of Electrical and Electronics Engineers (IEEE) standard 802.11 compliant networks (which may be referred to as WiFi networks), and so on, may be utilised to provide communication coverage to an environment. The environment may be a particular volume of space comprising, for example, the interior of one or more buildings. In some situations, it may be advantageous to supplement or replace the use of base stations (such as 5G base stations, gNBs) with additional transceivers to provide a sufficient level of coverage. By way of example, when it is desired to provide coverage to an interior or exterior volume of space that is remote from an available base station (such as a remote exterior location) or where connection to an available base station may be obstructed (such as the interior of a building where the building structure may obstruct radio waves), coverage may be provided at least in part through the deployment of transceivers.

Any suitable form of transceiver may be used to supplement or provide network coverage. The form of the transceiver may be determined based on the nature of the network, for example, where the network is a WiFi network, suitable WiFi transceivers may be provided. The volume of space for which coverage is to be provided may also influence the type of transceivers to be used; where the volume is large but comparatively empty (such as an exterior space) then it may effectively be covered using a small number of transceivers each supporting a large coverage area, and where the volume of space is crowded with objects that may interfere with coverage (such as a factory interior, where machinery may block transmissions and thereby interfere with coverage) then a larger number of transceivers each of which may support a smaller coverage area may be used.

The transceivers must be deployed in order to provide coverage. The deployment configuration of the transceivers may use a regular spatial configuration, such as a two-dimensional square grid formation with equal spacing between transceivers, transceivers arranged in concentric circles, a two-dimensional triangular or hexagonal grid configuration, and so on. However, when providing coverage for some volumes of space (and particularly where said volumes of space contain objects that may interfere with coverage), a regular spatial configuration may not be the most effective or efficient deployment configuration for the transceivers. It may therefore be desirable to provide a more effective and/or efficient deployment configuration for transceivers that is tailored to a particular volume of space.

In order to determine a more effective and/or efficient deployment configuration, physical testing in which the transceivers may be positioned in the volume of space and activated, then physically moved while coverage levels are monitored. However, this method may be cost and labour intensive, and also disruptive for users of the volume of space (for example, workers in a factory). As an alternative to physical testing or to minimise the required amount of physical testing, Machine Learning (ML) models may be trained using ML training techniques to determine deployment configurations. Techniques such as supervised and unsupervised learning may be used to train ML models to determine deployment configurations for transceivers. A technique that may be particularly effective for this purpose is reinforcement learning (RL). Document WO2022/123292 discloses a computer-implemented method for configuring network coverage using a machine learning, ML, agent hosting a ML model.

"Review of cellular radio network cell placement design, from traditional to artificial intelligence based approaches" by Šlapak, E. et al, 2019 International Symposium ELMAR, pp. 93-96, doi: 10.1109/ELMAR.2019.8918668, available at https://ieeexplore.ieee.org/document/8918668 as of 3 August 2022, discusses options for radio access network (RAN) base transceiver station (BTS) placement, including automated placement planning without the supervision of human domain experts. Considerations include BTS placement locations (either optimal, or sub-optimal) chosen during the planning process, to achieve maximization of desired RAN quality metrics.

RL allows a ML model to learn by attempting to maximise an expected cumulative reward for a series of actions utilising trial-and-error. RL agents (that is, a system which uses RL in order to improve ML model performance in a given task over time) may be closely linked to the system (environment) they are being used to model/control, and learn through experiences of performing actions that alter the state of the environment. Additionally or alternatively, RL may be used to train a ML model wherein a simulation of an environment is used, before the trained ML model is used to control an actual environment; this option may be of use where it is desirable to avoid having an untrained or partially trained ML model controlling an actual operating environment.

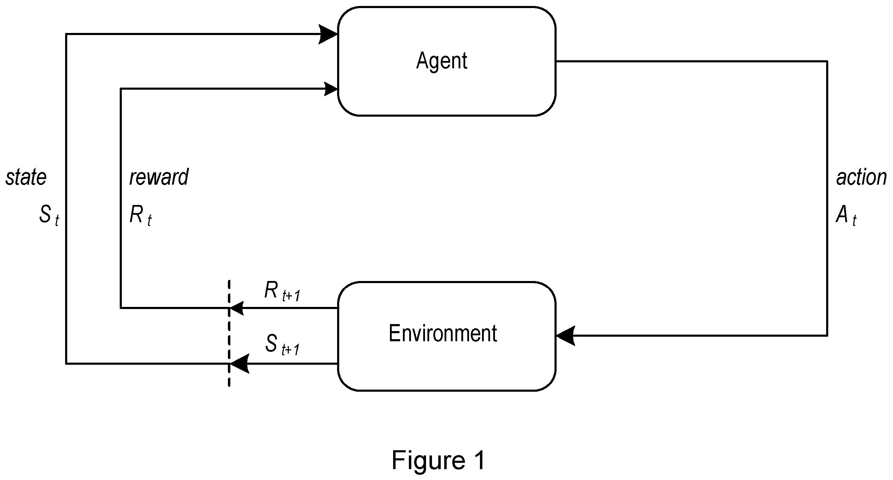

**Figure 1** illustrates schematically a typical RL system. In the architecture shown in Figure 1, an agent receives data from, and transmits actions to, the environment which it is being used to model/control (which may be a real environment or a simulated environment). For a time t, the agent receives information on a current state of the environment St. The agent then processes the information St, and generates one or more actions to be taken; one of these actions is to be implemented At. The action At to be implemented is then transmitted back to the environment and put into effect. The result of the action At is a change in the state of the environment with time, so at time t+1 the state of environment is Sₜ₊₁. The action also results in a (numerical, typically scalar) reward Rₜ₊₁, which is a measure of effect of the action At resulting in environment state Sₜ₊₁. The changed state of the environment Sₜ₊₁ is then transmitted from the environment to the agent, along with the reward Rₜ₊₁. Figure 1 shows reward Rt being sent to the agent together with state St; reward Rt is the reward resulting from action Aₜ₋₁, performed on state Sₜ₋₁. When the agent receives state information Sₜ₊₁ this information is then processed in conjunction with reward Rₜ₊₁ in order to determine the next action Aₜ₊₁, and so on. The action to be implemented is selected by the agent from actions available to the agent with the aim of maximising the cumulative reward. RL can provide a powerful solution for dealing with the problem of optimal decision making for agents interacting with uncertain environments.

While RL may be useful in training a ML model to provide a deployment configuration of transceivers for an operating environment, the training process required may be quite time consuming, particularly where the operating environment comprises a volume of space that is challenging to provide coverage for (for example, due to the dimensions of the volume of space and/or presence of multiple objects in the volume of space). It is therefore desirable to reduce the time and processing cost for the training of ML models to allow deployment configurations for transceivers to be efficiently generated.

### Summary

The invention is defined by the independent claims. Advantageous embodiments of the invention are given in the sub-claims.

### Brief Description of Drawings

The present disclosure is described, by way of example only, with reference to the following figures, in which:-
Figure 1 is a schematic illustration of a typical RL system;
Figure 2 is a flowchart of a method in accordance with embodiments;
Figure 3A is schematic diagram of a ML agent in accordance with embodiments;
Figure 3B is schematic diagram of a ML agent in accordance with embodiments;
Figure 4 is a schematic diagram of a ML agent in accordance with embodiments;
Figure 5A and Figure 5B are schematic diagrams illustrating second training data and third training data in accordance with an embodiment;
Figure 6 is pseudocode showing an example reward function; and
Figure 7 is a plot showing training results for ML systems.

### Detailed Description

For the purpose of explanation, details are set forth in the following description in order to provide a thorough understanding of the embodiments disclosed. It will be apparent, however, to those skilled in the art that the embodiments may be implemented without these specific details or with an equivalent arrangement.

In order to provide more efficient training of ML models for generating transceiver deployment configurations, thereby increasing the efficiency with which network coverage may be configured and provided, embodiments may utilise plural stages of training. Each of the plural stages of training may have one or more criteria which, when satisfied, indicate that the training stage is complete and the ML model may proceed to further training and/or use. The use of plural distinct stages of training in this way may be referred to as curriculum learning. In some embodiments where curriculum learning is combined with RL, the ML model may be trained using different versions of an operating environment in the different training stages. By way of example, a ML model may be trained using RL in conjunction with a simplified version of an operating environment in a first training stage. When the ML model has satisfied a first performance criterion (for example, a predetermined coverage level threshold being exceeded, the total number of missed connections over a given time frame being below a predetermined value, and so on), the first training stage may end. The ML model may then begin a second training stage, in which RL may be used in conjunction with a more complex (and likely more realistic) version of the operating environment is used. In embodiments utilising curriculum learning, different training stages may enable or change different elements of the operating environment (which is used in conjunction with RL to train the ML model). Between different trainings stages agents reward functions may be altered. Typically the observation and action spaces are not altered.

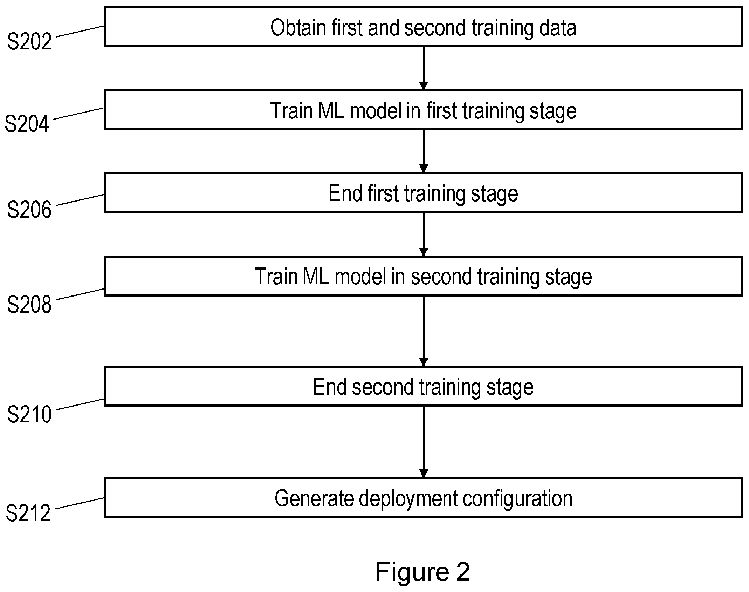

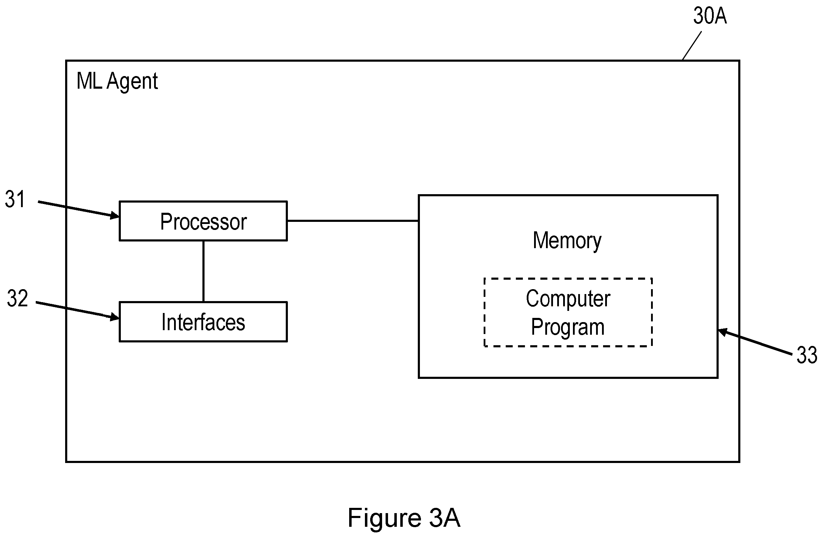

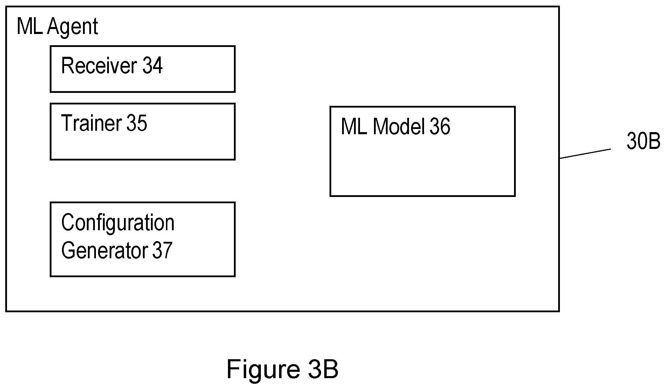

A method in accordance with embodiments is illustrated by **Figure 2****,** which is a flowchart showing a method for configuring network coverage using a ML agent hosting a ML model. The computer-implemented method may be performed by any suitable apparatus, for example, by a ML agent 30A, 30B such as those shown in **Figure 3A** and **Figure 3B****.** Where the network is a telecommunications network or WiFi network (or part of the same), the method may be performed by an apparatus (such as a ML agent) that is or forms part of a network node, such as a base station or core network node (or may be incorporated in a base station or core network node). The telecommunications network may be for example a 5G network or 6G network. In some embodiments, the ML agent may form part of an transceiver or a controller of transceivers.

As shown in step S202 of Figure 2, the method comprises obtaining first training data and second training data relating to an operating environment. The operating environment is the real world space for which network connection capability is to be provided (as contrasted to an environment used in a RL system). The step of obtaining the training data may be performed in accordance with a computer program stored in a memory 33, executed by a processor 31 in conjunction with one or more interfaces 32 of ML agent 30A, as illustrated by Figure 3A. Alternatively, the step of obtaining the training data may be performed by receiver 34 of ML agent 30B, as shown in Figure 3B. In some embodiments, the training data may use measurements from the operating environment for which a deployment configuration is to be generated. The training data may additionally or alternatively be obtained from other operating environments (which may be similar or dissimilar to the operating environment for which a deployment configuration is to be generated) and/or may be obtained from simulations of operating environments (including the operating environment for which a deployment configuration is to be generated). In some embodiments there are additional training stages beyond the first and second training stages referred to above, for example: a third training stage, a fourth training stage, and so on. Where there are additional training stages, the training data for these additional training stages may be obtained at the same time as that for the first and second training stages, or alternatively may be obtained at another time. It is necessary to obtain training data for a training stage prior to the completion of that training stage, but not necessary to obtain it any sooner than this; accordingly, the training data for later stages may be obtained while earlier stages are in progress (for example, the data for the second training stage may be obtained while the first training stage is ongoing).

In some embodiments, the operating environment may comprise one or more volumes of space (including in some embodiments wherein the entire operating environment may be a volume of space). Volumes of space may comprise or be the interiors of buildings, or exterior spaces. Further, the volumes of space may comprise one or more objects, wherein the objects may be static or dynamic objects. By way of example with reference to interior spaces, the volume of space may be or comprise a factory space and the objects may comprise industrial equipment, or the interior of the building may be a medical facility and the objects may comprise medical equipment, or the interior of the building may be an office space and the objects may comprise office equipment. By way of example with reference to exterior spaces, the volume of space may be a portion of a town or city (where the objects may comprise street furniture), or a forest (where the objects may comprise trees). Static objects are those which, over the timescales for which deployment configurations would be expected to be used without review (for example, tens of days, weeks or months), would not be expected to substantially alter spatial position (for example, interior walls, street signs, and so on). Dynamic objects are those which would be expected to substantially alter spatial position in the same time scales (for example, factory machinery). In some embodiments, objects may form part of the training data. Further, in some embodiments static and dynamic objects may be considered separately, for example in different training stages. Separate consideration of static and dynamic objects may be advantageous to fully assess the coverage that may be provided by a deployment configuration of transceivers; if a dynamic object may move in such a way as to obscure coverage, improved coverage may be provided by training the ML model to take this into account when generating deployment configurations.

The training data may use measurements taken in the operating environment and/or in another environment (as discussed above), and/or simulation measurements. The measurements may be used to estimate a quality of coverage provided, for example, an estimated total volume within a volume of space wherein the coverage is below a predetermined threshold level, an estimated percentage of attempts to connect to a transceiver that fail, estimated pathloss statistics, estimated dropped symbol to correctly received symbol ratios, and so on. The training data may also include information on the operating environment, including properties of any static/dynamic objects in the operating environment (where the properties may include location, dimensions, materials the objects are formed from, and so on). The training data may further include locations and properties (such as type of antenna used, transmission power, and so on) of transceivers, and may also include locations of equipment that may be serviced by the transceivers (that is, equipment that may seek to connect to the network using the coverage provided by the transceivers). The nature and capabilities of the equipment seeking to connect to the network using the transceivers will vary depending on the nature of the operating environment and/or volume of space. By way of example, when coverage is to be provided to the interior of a factory, the equipment may include industrial machinery, sensors (such as loT sensors) and so on. When coverage is to be provided to a portion of a town or city, the equipment may include user equipments (UEs), traffic sensors, and so on. The training data may also comprise information on potential locations for transceivers. In some embodiments, particularly where the operating environment comprises a volume of space that itself comprises the interior of a building, some or all of the transceivers may be deployed substantially above the volume of space (where the term "above" is used to indicate that the transceivers may be deployed further from the centre of the Earth than the volume of space). An example of a situation in which the transceivers may be deployed substantially above the volume of space is where coverage is to be provided for a factory, in which the transceivers may be deployed in a suspended ceiling or gantry substantially above the volume of space. The training data may be sent directly to a device or system executing a method in accordance with embodiments, for example, direct to a ML agent. The training data may be stored at, or accessible to, the device or system executing a method in accordance with embodiments.

When at least the first training data (and optionally training data for further stages, as discussed above) has been obtained, the method then continues with the training of the ML model in a first training stage using the first training data, as shown in step S204 of Figure 2. The step of training the ML model in a first training stage may be performed in accordance with a computer program stored in a memory 33, executed by a processor 31 in conjunction with one or more interfaces 32 of ML agent 30A, as illustrated by Figure 3A. Alternatively, the step of training the ML model 36 in a first training stage may be performed by trainer 35 of ML agent 30B, as shown in Figure 3B. Before training, the initialisation parameters of a ML model are typically set to generic values so that the ML model does not initially favour any particular action or actions over other actions, however in some embodiments the initialisation parameters may be set to non-generic values. In particular, the initialisation parameters for the ML model may be obtained from a further ML model that has already been trained in a further operating environment having similar properties to the operating environment in which the ML model to be trained will operate. Obtaining initialisation parameters from a further ML model in this way may shorten the training process for the ML model, allowing the ML model to be trained to a sufficient degree to provide useful suggested actions in fewer rounds/stages of training. Use of initialisation parameters from a further ML model may therefore reduce the computing burden (that is, the amount of processor time and memory used) to train the ML model. The choice of a further ML model should be similar to that of the ML model to be trained, for example, should relate to the same or similar type of operating environment, similar type of transceivers, similar coverage demands, and so on.

The first training stage continues until a first performance criterion is satisfied; when this occurs the first training stage ends as shown in step S206. The determination that the first performance criterion is satisfied, and consequential ending of the first training stage, may be performed in accordance with a computer program stored in a memory 33, executed by a processor 31 in conjunction with one or more interfaces 32 of ML agent 30A, as illustrated by Figure 3A. Alternatively, the determination that the first performance criterion is satisfied, and consequential ending of the first training stage, may be performed by trainer 35 of ML agent 30B, as shown in Figure 3B. The nature of the first performance criterion is determined based on the training data, operating environment, transceivers, and so on. In embodiments where RL is used in the training of the ML model, the first performance criterion may be based on reward function values obtained, for example, based on an average of several rewards, highest obtained rewards, and so on. The reward function values may be based, for example, on one or more of an estimated coverage level of the transceivers across the volume of space; a number of transceivers used; an estimated total volume within the volume of space wherein the coverage is below a predetermined threshold level; an average duration between movements of transceivers where dynamic deployment is used; and so on. An example embodiment in which RL rewards are used in the first performance criterion is discussed in greater detail below. Although the term "performance criterion" (singular) is used herein, in some embodiments there may be a plurality of conditions to be satisfied in order for a performance criterion to be satisfied. Typically, the performance criteria for the different training stages are not the same, although in some embodiments the same performance criteria may be used in plural training stage (including in all training stages). In some embodiments, the performance criterion may include a time limitation, for example, the training stage will proceed for a given number of training iterations or for a given amount of time (for example, 2 hours) and then will automatically end regardless of the ML model performance. Typically (although not exclusively), the methods are implemented in such a way that, once a training stage is complete, the training of the ML model may not return to that training stage. In this way, the oscillation of training between stages (for example, first training stage, then second training stage, then first training stage, and so on) is prevented.

Following the completion of the first training stage, the method then proceeds to the training of the ML model in the second training stage, as shown in step S208 of Figure 2. The training of the ML model in the second training stage, and also the ending of the second training stage when the second performance criterion is satisfied (as shown in step S210 of Figure 2), may be performed in accordance with a computer program stored in a memory 33, executed by a processor 31 in conjunction with one or more interfaces 32 of ML agent 30A, as illustrated by Figure 3A. Alternatively, the second training stage and subsequent ending of the second training stage may be performed by trainer 35 of ML agent 30B, as shown in Figure 3B. In some embodiments, following the conclusion of the second training stage, the method may continue with a third training stage, fourth training stage, fifth training stage, and so on. Each subsequent training stage would typically require training data (third training data, fourth training data, and so on), which may be obtained at the same time as the first and/or second training data, or at different times to the obtaining of the first and/or second training data. Typically, the complexity of training data used increases with the training stages, so the fourth training stage would typically utilise more complex training data than the third training stage, for example. Each training stage ends when the ML model satisfies an associated performance criterion (as explained above, the performance criteria are typically different for different training stages, although in some embodiments the same criterion may be used for plural stages).

When the performance criterion for the final training stage (which may be the second training stage or a subsequent training stage, as discussed above) has been satisfied, the ML model may then be considered trained, and may be used to generate a deployment configuration for configuring the spatial deployment of a plurality of transceivers to provide network connection capability to the operating environment, as shown in step S212 of Figure 2. Although the ML model may generate a deployment configuration by starting from zero transceivers positioned (a "blank slate"), typically it is more efficient for the ML model to generate a deployment configuration by modifying a regular spatial configuration of transceivers, based on the operating environment for which network connection capability is to be provided. The term "regular spatial configuration" is used here to refer to a generic configuration which may take into account the overall dimensions of the operating environment (length, width, height), but not the location of any objects within the operating environment and the potential impacts of said objects on the coverage. Examples of regular spatial configurations include two or three dimensional square grids, two or three dimensional triangular grids, and so on. The generation of the deployment configuration may be performed in accordance with a computer program stored in a memory 33, executed by a processor 31 in conjunction with one or more interfaces 32 of ML agent 30A, as illustrated by Figure 3A. Alternatively, the generation of the deployment configuration may be performed by configuration generator 37 of ML agent 30B, as shown in Figure 3B. Once the deployment configuration has been generated, in some embodiments this configuration is outputted for subsequent use in transceiver deployment. The deployment configuration may be outputted in any suitable form, for example, as a series of coordinates or as instructions for an autonomous positioning vehicle to position the transceivers. In some embodiments the method further comprises deploying the plurality of transceivers (to provide coverage to the operating environment) based on the generated deployment configuration. The deployment may be effected using human labour, automated deployment via autonomous machines, a combination of human and machine labour, or in any other suitable way. In some embodiments in addition or alternatively to physically positioning transceivers, the deployment configuration may comprise altering the coverage provided by transceivers using antenna adjustment, for example, by redirecting beams provided by transceivers.

As discussed above, where curriculum learning is utilised typically the first training stage is more simple than subsequent stages, that is, utilises a simpler training environment (that is, training data relating to a more simple training environment) than later training stages. The use of plural training stages of increasing complexity may be illustrated by considering an example (in accordance with embodiments) in which an operating environment for which network coverage is to be provided comprises the interior of a building (specifically a production cell within the factory). In this example, the factory interior (production cell) may comprise static objects (such as interior walls) and dynamic objects (such as industrial machinery, for example, robot arms). The transceivers in this example are microcells supported by small transceivers, also referred to as "radio dots", used to provide 6G network coverage. The microcells are capable of being moved between different spatial locations using human or automated (that is, robot) manipulators, to adjust the coverage deployment. To illustrate how plural training stages may be utilised, in this example the ML model is to be trained using four training stages; of course further examples in accordance with embodiments may utilise larger or smaller numbers of training stages.

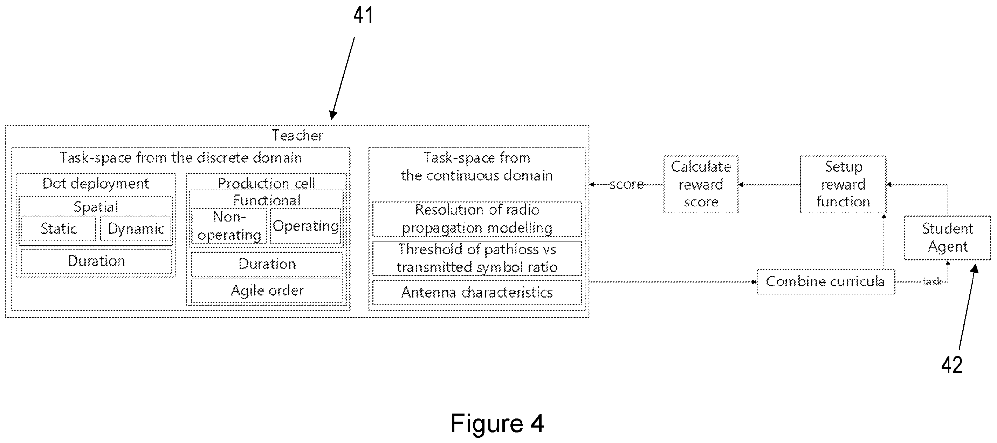

**Figure 4** is a schematic diagram of a ML agent in accordance with embodiments illustrating how a ML agent may comprise a training unit 41 (in the role of "Teacher") used to train a ML model 42 (in the role of "Student") using curriculum learning. The training unit 41 receives the training data and establishes the parameters for the different training stages. In the example illustrated in Figure 4, the ML model may consider static deployments of the transceivers (in which the transceivers are not moved after deployment) and dynamic deployments of transceivers (in which the transceivers may be moved, and/or antennas altered to shift a coverage region, after deployment). Further, the environment may be treated as a static volume (with all objects considered static) or a dynamic volume (taking into account dynamic objects). Given the above considerations, the level of complexity of the four training stages may be considered as follows: in the first stage of the training the ML model may be trained using first training data that relates to the most simple of the options discussed above, that is, a static deployment of transceivers in conjunction with a static volume environment. When the ML model satisfies a first training criterion (discussed in greater detail below; by way of example, the reward function achieved by the ML model is above a certain threshold), the first training stage may then end, and the training may continue to be trained using more complex training data (the second training data) in the second training stage. The same process may then be repeated for the third and fourth training stages, after which the ML model may then be ready for use in generating a deployment configuration. With reference to the Figure 4 example: the second training data may relate to a dynamic deployment of transceivers in a static volume; the third training data may relate to a static deployment of transceivers in a dynamic volume; and the fourth training data may relate to a dynamic deployment of transceivers in a dynamic volume.

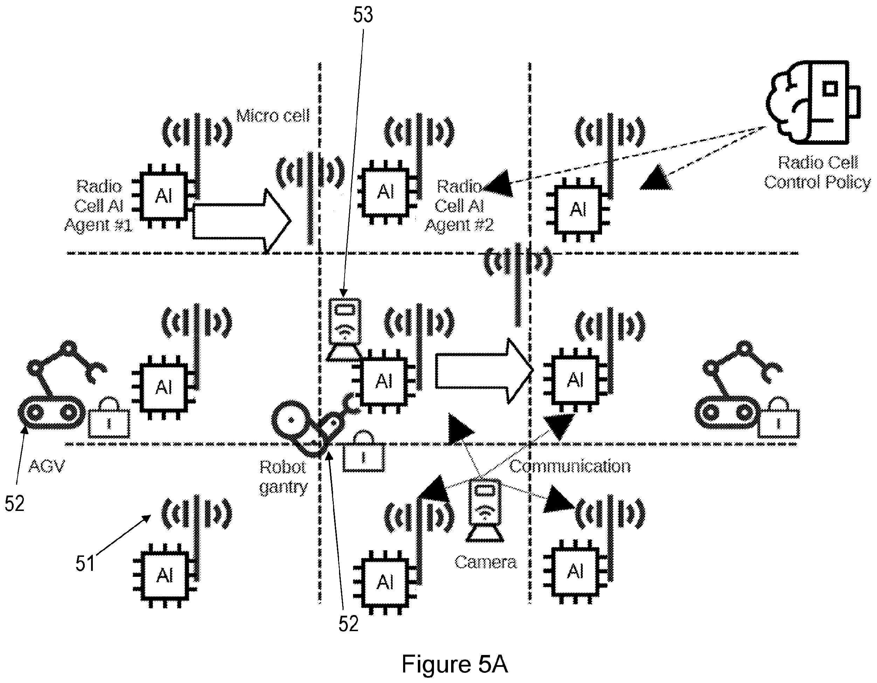

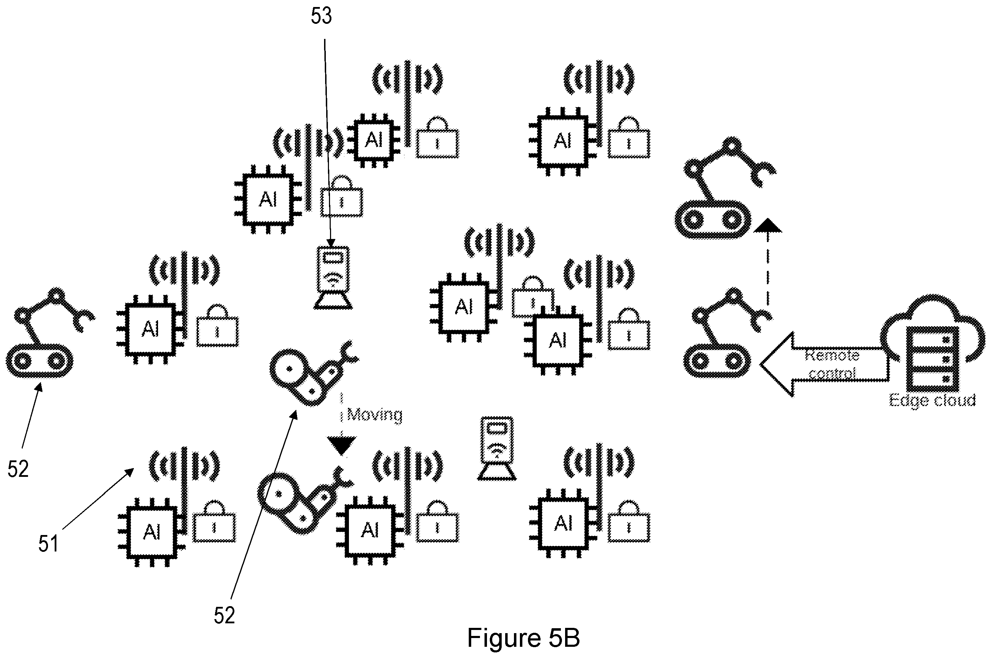

**Figure 5A** and **Figure 5B** (collectively Figure 5) are schematic diagrams illustrating the second training data (Figure 5A) and third training data (Figure 5B) of the Figure 4 example. As shown in Figure 5 In this example in which the network coverage is to be provided for a production cell within the factory, the transceivers (microcells) may be located above the production cell (environment) in a suspended ceiling area, and may be moved within that area in two dimensions (that is, on a plane substantially parallel to the plane of the top of the production cell). In the example of Figure 5A, the microcells 51 are each moved within a general area; the delineation between areas is shown in Figure 5A by dashed lines. Figure 5A shows objects 52 (in this example, a robotic gantry and two automatic guided vehicles, AGVs) within the production cell. In the second training data, the objects 52 are treated as static objects. Also shown in Figure 5A are plural cameras 53; these are examples of devices for which network connection capability is to be provided. In contrast to Figure 5A, in Figure 5B the microcells are in a static deployment, while the environment is dynamic. Accordingly, and as indicated in Figure 5B, the movements of the robot gantry and AGVs are taken into consideration. The temporal and spatial changes to the environment caused by the dynamic objects typically make it more difficult for the ML model to learn to provide suitable coverage for the environment than would be the case with a static environment.

Typically, during the training stages, RL is used in a simulation of the operating environment for which a deployment configuration is to be generated, with any suitable systems used to simulate the operating environment and facilitate the training. In the example shown in Figure 4 and Figure 5, the production cell was based on a cell used in the Agile Robotics for Industrial Automation Competition (ARIAC) 2020 competition (details available at https://www.nist.gov/el/intelligent-systems-division-73500/agile-robotics-industrial-automation-competition as of 10 August 2022). The production cell was simulated using the Robot Operating System (details available at https://www.ros.org/ as of 10 August 2022) and Gazebo simulator (details available at https://gazebosim.org as of 10 August 2022), and was augmented with simulated sensors and transceivers. Ray tracing programs were used to help compute signal losses between transmission points and reception points, thereby allowing coverage calculations to be performed; an example of a suitable system is ns-3 (details available at https://github.com/nsnam as of 10 August 2022).

In the example of Figure 4 and Figure 5, as RL is used in the training stages to train the ML model, the performance criteria for determining when the training stages should end may be based on the RL properties, specifically the reward obtained. In this example, when a reward above a predetermined threshold is consistently obtained (that is, obtained for each of a set number of consecutive actions), the performance criterion for that training stage is satisfied and the training stage may end; alternative criteria may be used in other examples. Where RL is used to train the ML model, the exact reward function used is dependent upon the ML model parameters, the operating environment to which the training data relates, the nature of the transceivers, and so on. In the example of Figure 4 and Figure 5, the reward functions for the training stages may be established with reference to the following considerations:
- Enabling the next stage can depend on multiple things, e.g., previous reward;
- It is forbidden to restart an earlier training stage once this earlier training stage has ended (to avoid fluctuation between training stages);

With reference to the second training stage as a specific example (dynamic deployment in a static environment), the reward function may be configured to:
- Reward for the signal losses of the sensors if they approach an expected minimum.
- Penalise:
   - if transceivers remain in the same position between actions.
   - if transceivers are stationary for above a set number of training iterations.
   - to avoid overfitting for a specific number of steps the reward function for the second training stage may randomly vary the set number of training iterations for which a transceiver may remain stationary

With reference to the fourth training stage (dynamic deployment in an operating production cell, dynamic environment), the reward function may be configured to:
- Penalise moving transceivers after the set steps is decreased to encourage moving them when the dot deployment setup needs to be optimized due to the operation of the production cell.

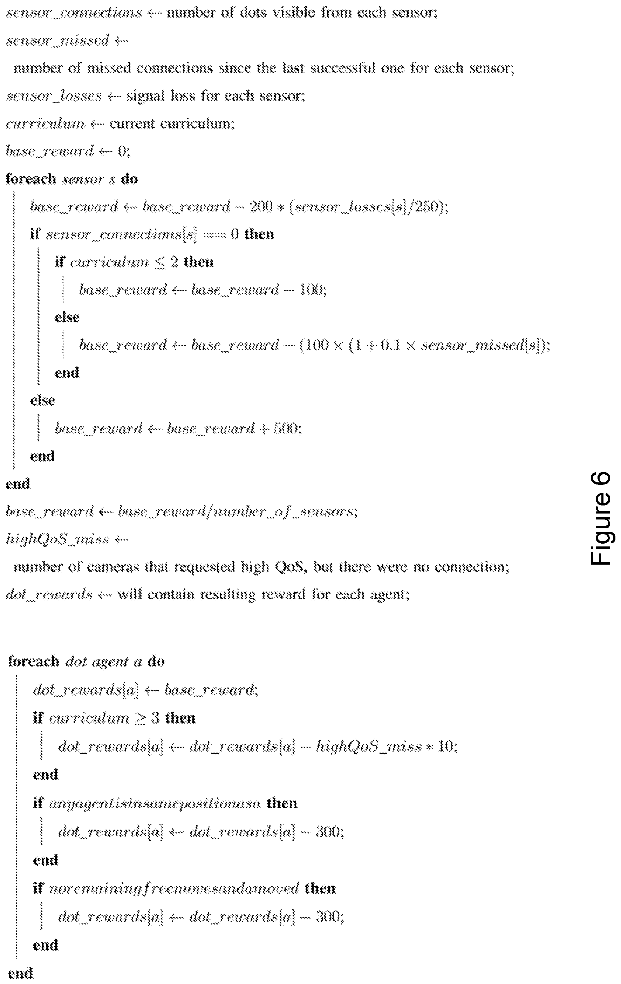

An example reward function is shown in **Figure 6** in pseudocode; the Figure 6 reward function takes into account the number of radio dots visible for each connection point (sensor), along with the number of missed connections since the last successful one for each sensor, signal loss for each sensor, which curriculum (training stage) is being used to train the ML model, and a number of cameras that requested a high Quality of Service (QoS) but were not able to connect. Typically, the reward function for each training stage may be set using human expert input, although automatic generation of a reward function using a ML system may also be used.

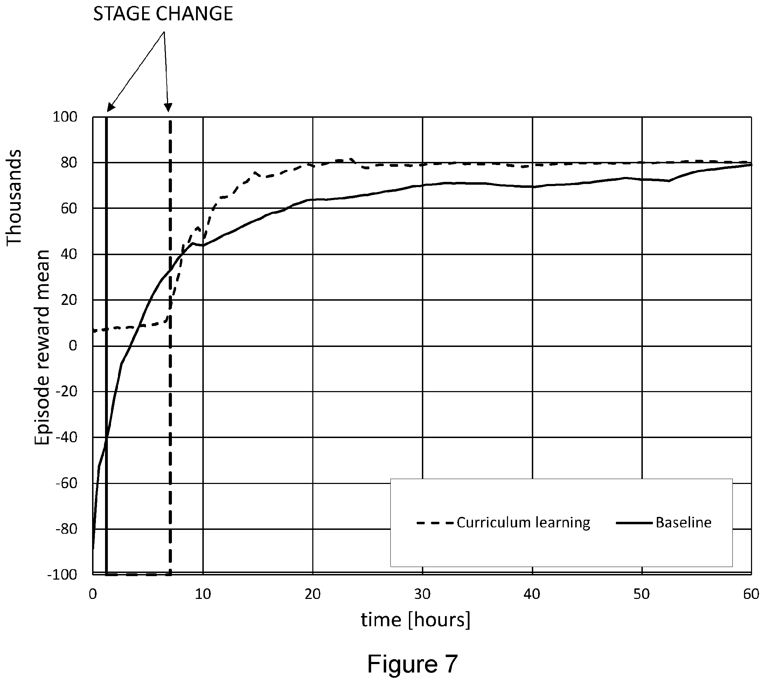

**Figure 7** is a plot illustrating how embodiments may improve training results for ML systems. In Figure 7, the x axis shows training time in hours, while the y axis shows mean reward for a training iteration obtained by a ML model. The solid line on the plot (marked "Baseline") shows the performance of a ML model trained using standard RL, while the dashed line (marked "Curriculum learning") shows the performance of a model trained using plural training stages in accordance with an example embodiment. The data is obtained from a similar operating environment simulation to that discussed above with reference to Figure 4 and Figure 5. Three training stages are used: in the first, the training data relates to dynamic transceiver deployment in a static environment; in the second, the training data again relates to dynamic transceiver deployment in a static environment, save that the acceptable length of deployment without movement is increased; in the third, the training data relates to static transceiver deployment in a dynamic environment. The training data used to train the ML model using standard RL is similar to the third training stage data discussed above. In order to illustrate the effect of embodiments, the same reward function is used throughout for both the ML model trained using standard RL and the model trained using plural training stages in accordance with an example embodiment. The points at which the switch between training stages occurs are indicated by the vertical lines marked STAGE CHANGE on the plot. As is illustrated by the plot, the performance of the model trained using plural training stages in accordance with an example embodiment is consistently better after the start of the third and final training stage (in the sense that a higher reward is obtained) than that of the ML model trained using standard RL at equivalent total training times. The ML model trained using standard RL stabilises at an acceptable reward level (that is, is trained) after approximately 60 hours, while the model trained using plural training stages in accordance with an example stabilises at the same level after approximately 20 hours.

Embodiments allow the training process for a ML model to be completed faster than may be achieved using existing systems, and/or allow a ML model to be trained to a higher proficiency in an equivalent time frame than may be achieved using existing systems. Accordingly, deployment configurations for transceivers that provide effective network connectivity may be generated more time and resource efficiently than may be the case using existing systems.

It will be appreciated that examples of the present disclosure may be virtualised, such that the methods and processes described herein may be run in a cloud environment.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

In general, the various exemplary embodiments may be implemented in hardware or special purpose circuits, software, logic or any combination thereof. For example, some embodiments may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure. For the avoidance of doubt, the scope of the disclosure is defined by the claims.

## Claims

1. A computer-implemented method for configuring network coverage using a machine learning, ML, agent hosting a ML model, the method comprising:
obtaining first training data and second training data relating to an operating environment, wherein the operating environment comprises a volume of space which comprises one or more static objects;
training the ML model in a first training stage using the first training data, wherein the first training stage comprises modelling a static deployment of transceivers in the volume of space;
when the ML model satisfies a first performance criterion, ending the first training stage;
training the ML model in a second training stage using the second training data, wherein the second training stage comprises modelling a dynamic deployment of transceivers in the volume of space;
when the ML model satisfies a second performance criterion, ending the second training stage; and
using the ML model to generate a deployment configuration for configuring the spatial deployment of a plurality of transceivers to provide network connection capability to the operating environment.

2. A machine learning, ML, agent configured to host a ML model, the ML agent comprising processing circuitry and a memory containing instructions executable by the processing circuitry, whereby the ML agent is operable to:
obtain first training data and second training data relating to an operating environment, wherein the operating environment comprises a volume of space which comprises one or more static objects;
train the ML model in a first training stage using the first training data, in the first training stage to model a static deployment of transceivers in the volume of space;
end the first training stage when the ML model satisfies a first performance criterion;
train the ML model in a second training stage using the second training data, in the second training stage to model a dynamic deployment of transceivers in the volume of space;
end the second training stage when the ML model satisfies a second performance criterion; and
generate a deployment configuration for configuring the spatial deployment of a plurality of transceivers to provide network connection capability to the operating environment using the ML model.

3. The ML agent of claim 2, configured to use the ML model to generate the deployment configuration by modifying a regular spatial configuration of transceivers.

4. The ML agent of claim 3, wherein the regular configuration is a regular two dimensional grid configuration.

5. The ML agent of any of claims 2-3, wherein the volume of space further comprises one or more dynamic objects.

6. The ML agent of claim 5 further configured to obtain third training data and, when the ML model has satisfied the second performance criterion, to train the ML model in a third training stage using the third training data, wherein the ML agent is configured in the third training stage to model a static deployment of transceivers in the volume of space comprising one or more dynamic objects.

7. The ML agent of any of claims 5 and 6 further configured to obtain fourth training data and, when the ML model has satisfied the second performance criterion, to train the ML model in a fourth training stage using the fourth training data, wherein the ML agent is configured in the fourth training stage to model a dynamic deployment of transceivers in the volume of space comprising one or more dynamic objects.

8. The ML agent of claim 7, configured to train the ML model in both the third training stage and the fourth training stage, and further configured to end the third training stage and begin the fourth training stage when the ML model satisfies a third performance criterion.

9. The ML agent of any of claims 2 to 8, wherein the volume of space comprises the interior of a building.

10. The ML agent of claim 9, wherein the interior of the building is a factory space and the objects comprise industrial equipment, or wherein the interior of the building is a medical facility and the objects comprise medical equipment, or wherein the interior of the building is an office space and the objects comprise office equipment.

11. The ML agent of any of claims 9 and 10, wherein the transceivers are to be deployed in a substantially planar deployment configuration that is located further from the centre of the Earth than the volume of space.

12. The ML agent of any of claims 2 to 11 further configured to utilise Reinforcement Learning, RL, in the training of the ML model.

13. The ML agent of claim 12, further configured to utilise RL reward function values when determining whether at least one performance criterion is satisfied.

14. The ML agent of claim 13, further configured to determine the RL reward function values utilising at least one of:
an estimated coverage level of the transceivers across the volume of space;
a number of transceivers used;
an estimated total volume within the volume of space wherein the coverage is below a predetermined threshold level; and
an average duration between movements of transceivers where dynamic deployment is used.

15. The ML agent of any of claims 2 to 14, wherein:
the transceivers are 3rd Generation Partnership Project, 3GPP, 5th Generation, 5G, radio transceivers, and the network connection capability is 5G network connection capability; or
the transceivers are WiFi transceivers conforming to the Institute of Electrical and Electronics Engineers, IEEE, standard 802.11, and the network connection capability is WiFi network connection capability; or
the transceivers are 3rd Generation Partnership Project, 3GPP, 6th Generation, 6G, radio transceivers, and the network connection capability is 6G network connection capability.

## Patentansprüche

1. Computerumgesetztes Verfahren zum Konfigurieren einer Netzwerkabdeckung unter Verwendung eines Agents für maschinelles Lernen, ML-Agent, der ein ML-Modell hostet, wobei das Verfahren Folgendes umfasst:
Erlangen erster Trainingsdaten und zweiter Trainingsdaten, die sich auf eine Betriebsumgebung beziehen, wobei die Betriebsumgebung ein Raumvolumen umfasst, das ein oder mehrere statische Objekte umfasst;
Trainieren des ML-Modells in einer ersten Trainingsstufe unter Verwendung der ersten Trainingsdaten, wobei die erste Trainingsstufe Modellieren eines statischen Einsatzes von Sendeempfängern in dem Raumvolumen umfasst;
wenn das ML-Modell ein erstes Leistungskriterium erfüllt, Beenden der ersten Trainingsstufe;
Trainieren des ML-Modells in einer zweiten Trainingsstufe unter Verwendung der zweiten Trainingsdaten, wobei die zweite Trainingsstufe Modellieren eines dynamischen Einsatzes von Sendeempfängern in dem Raumvolumen umfasst;
wenn das ML-Modell ein zweites Leistungskriterium erfüllt, Beenden der zweiten Trainingsstufe; und
Verwenden des ML-Modells, um eine Einsatzkonfiguration zum Konfigurieren des räumlichen Einsatzes einer Vielzahl von Sendeempfängern zu erzeugen, um eine Netzwerkverbindungsfähigkeit an die Betriebsumgebung bereitzustellen.

2. Agent für maschinelles Lernen, ML-Agent, der dazu konfiguriert ist, ein ML-Modell zu hosten, wobei der ML-Agent eine Verarbeitungsschaltung und einen Speicher umfasst, der Anweisungen beinhaltet, die durch die Verarbeitungsschaltung ausführbar sind, wobei der ML-Agent zu Folgendem betreibbar ist:
Erlangen erster Trainingsdaten und zweiter Trainingsdaten, die sich auf eine Betriebsumgebung beziehen, wobei die Betriebsumgebung ein Raumvolumen umfasst, das ein oder mehrere statische Objekte umfasst;
Trainieren des ML-Modells in einer ersten Trainingsstufe unter Verwendung der ersten Trainingsdaten in der ersten Trainingsstufe, um einen statischen Einsatz von Sendeempfängern in dem Raumvolumen zu modellieren;
Beenden der ersten Trainingsstufe, wenn das ML-Modell ein erstes Leistungskriterium erfüllt;
Trainieren des ML-Modells in einer zweiten Trainingsstufe unter Verwendung der zweiten Trainingsdaten in der zweiten Trainingsstufe, um einen dynamischen Einsatz von Sendeempfängern in dem Raumvolumen zu modellieren;
Beenden der zweiten Trainingsstufe, wenn das ML-Modell ein zweites Leistungskriterium erfüllt; und
Erzeugen einer Einsatzkonfiguration zum Konfigurieren des räumlichen Einsatzes einer Vielzahl von Sendeempfängern, um eine Netzwerkverbindungsfähigkeit an die Betriebsumgebung unter Verwendung des ML-Modells bereitzustellen.

3. ML-Agent nach Anspruch 2, der dazu konfiguriert ist, das ML-Modell dazu zu verwenden, die Einsatzkonfiguration durch Modifizieren einer regulären räumlichen Konfiguration von Sendeempfängern zu erzeugen.

4. ML-Agent nach Anspruch 3, wobei die reguläre Konfiguration eine reguläre zweidimensionale Gitterkonfiguration ist.

5. ML-Agent nach einem der Ansprüche 2-3, wobei das Raumvolumen ferner ein oder mehrere dynamische Objekte umfasst.

6. ML-Agent nach Anspruch 5, der ferner dazu konfiguriert ist, dritte Trainingsdaten zu erlangen, und, wenn das ML-Modell das zweite Leistungskriterium erfüllt hat, das ML-Modell in einer dritten Trainingsstufe unter Verwendung der dritten Trainingsdaten zu trainieren, wobei der ML-Agent in der dritten Trainingsstufe dazu konfiguriert ist, einen statischen Einsatz von Sendeempfängern in dem Raumvolumen, das ein oder mehrere dynamische Objekte umfasst, zu modellieren.

7. ML-Agent nach einem der Ansprüche 5 und 6, der ferner dazu konfiguriert ist, vierte Trainingsdaten zu erlangen, und, wenn das ML-Modell das zweite Leistungskriterium erfüllt hat, das ML-Modell in einer vierten Trainingsstufe unter Verwendung der vierten Trainingsdaten zu trainieren, wobei der ML-Agent in der vierten Trainingsstufe dazu konfiguriert ist, einen dynamischen Einsatz von Sendeempfängern in dem Raumvolumen, das ein oder mehrere dynamische Objekte umfasst, zu modellieren.

8. ML-Agent nach Anspruch 7, der dazu konfiguriert ist, das ML-Modell in sowohl der dritten Trainingsstufe als auch der vierten Trainingsstufe zu trainieren, und ferner dazu konfiguriert ist, die dritte Trainingsstufe zu beenden und die vierte Trainingsstufe zu beginnen, wenn das ML-Modell ein drittes Leistungskriterium erfüllt.

9. ML-Agent nach einem der Ansprüche 2 bis 8, wobei das Raumvolumen das Innere eines Gebäudes umfasst.

10. ML-Agent nach Anspruch 9, wobei das Innere des Gebäudes ein Fabrikraum ist und die Objekte eine industrielle Ausrüstung umfassen oder wobei das Innere des Gebäudes eine medizinische Einrichtung ist und die Objekte eine medizinische Ausrüstung umfassen oder wobei das Innere des Gebäudes ein Büroraum ist und die Objekte eine Büroausrüstung umfassen.

11. ML-Agent nach einem der Ansprüche 9 und 10, wobei die Sendeempfänger in einer im Wesentlichen ebenen Einsatzkonfiguration einzusetzen sind, die sich weiter vom Erdmittelpunkt entfernt befindet als das Raumvolumen.

12. ML-Agent nach einem der Ansprüche 2 bis 11, der ferner dazu konfiguriert ist, bestärkendes Lernen, RL, beim Trainieren des ML-Modells zu verwenden.

13. ML-Agent nach Anspruch 12, der ferner dazu konfiguriert ist, Werte einer RL-Belohnungsfunktion beim Bestimmen, ob mindestens ein Leistungskriterium erfüllt ist, zu verwenden.

14. ML-Agent nach Anspruch 13, der ferner dazu konfiguriert ist, die Werte der RL-Belohnungsfunktion unter Verwendung von mindestens einem von Folgendem zu bestimmen:
einer geschätzten Abdeckungsrate der Sendeempfänger in dem gesamten Raumvolumen;
einer Anzahl an verwendeten Sendeempfängern;
einem geschätzten Gesamtvolumen innerhalb des Raumvolumens, wobei die Abdeckung unter
einer vorbestimmten Schwellenwertrate liegt; und
einer Durchschnittsdauer zwischen Bewegungen von Sendeempfängern, wo ein dynamischer Einsatz verwendet wird.

15. ML-Agent nach einem der Ansprüche 2 bis 14, wobei:
die Sendeempfänger Funk-Sendeempfänger des 3rd Generation Partnership Project, 3GPP, der 5th Generation, 5G, sind und die Netzwerkverbindungsfähigkeit eine 5G-Netzwerkverbindungsfähigkeit ist; oder
die Sendeempfänger WiFi-Sendeempfänger sind, die dem Standard 802.11 des Institute of Electrical and Electronics Engineers, IEEE, entsprechen, und die Netzwerkverbindungsfähigkeit eine WiFi-Netzwerkverbindungsfähigkeit ist; oder
die Sendeempfänger Funk-Sendeempfänger des 3rd Generation Partnership Project, 3GPP, der 6th Generation, 6G, sind und die Netzwerkverbindungsfähigkeit eine 6G-Netzwerkverbindungsfähigkeit ist.

## Revendications

1. Procédé mis en œuvre par ordinateur pour configurer la couverture réseau à l'aide d'un agent d'apprentissage automatique, ML, hébergeant un modèle ML, le procédé comprenant :
l'obtention de premières données d'entraînement et de secondes données d'entraînement relatives à un environnement d'exploitation, l'environnement d'exploitation comprenant un volume d'espace qui comprend un ou plusieurs objets statiques ;
l'entraînement du modèle ML dans une première étape d'entraînement en utilisant les premières données d'entraînement, la première étape d'entraînement comprenant la modélisation d'un déploiement statique d'émetteurs-récepteurs dans le volume d'espace ;
lorsque le modèle ML satisfait un premier critère de performance, la finalisation de la première étape d'entraînement ;
l'entraînement du modèle ML dans une seconde étape d'entraînement en utilisant les secondes données d'entraînement, la seconde étape d'entraînement comprenant la modélisation d'un déploiement dynamique d'émetteurs-récepteurs dans le volume d'espace ;
lorsque le modèle ML satisfait un second critère de performance, la finalisation de la seconde étape d'entraînement ; et
l'utilisation du modèle ML pour générer une configuration de déploiement pour configurer le déploiement spatial d'une pluralité d'émetteurs-récepteurs afin de fournir une capacité de connexion réseau à l'environnement d'exploitation.

2. Agent d'apprentissage automatique, ML, configuré pour héberger un modèle ML, l'agent ML comprenant un circuit de traitement et une mémoire contenant des instructions exécutables par le circuit de traitement, l'agent ML fonctionnant pour :
obtenir des premières données d'entraînement et des secondes données d'entraînement relatives à un environnement d'exploitation, l'environnement d'exploitation comprenant un volume d'espace qui comprend un ou plusieurs objets statiques ;
entraîner le modèle ML dans une première étape d'entraînement en utilisant les premières données d'entraînement, dans la première étape d'entraînement pour modéliser un déploiement statique d'émetteurs-récepteurs dans le volume d'espace ;
terminer la première étape d'entraînement lorsque le modèle ML satisfait un premier critère de performance ;
entraîner le modèle ML dans une seconde étape d'entraînement en utilisant les secondes données d'entraînement, dans la seconde étape d'entraînement pour modéliser un déploiement dynamique d'émetteurs-récepteurs dans le volume d'espace ;
terminer la seconde étape d'entraînement lorsque le modèle ML satisfait un second critère de performance ; et
générer une configuration de déploiement pour configurer le déploiement spatial d'une pluralité d'émetteurs-récepteurs pour fournir une capacité de connexion réseau à l'environnement d'exploitation à l'aide du modèle ML.

3. Agent ML selon la revendication 2, configuré pour utiliser le modèle ML pour générer la configuration de déploiement en modifiant une configuration spatiale régulière d'émetteurs-récepteurs.

4. Agent ML selon la revendication 3, dans lequel la configuration régulière est une configuration de grille bidimensionnelle régulière.

5. Agent ML selon l'une quelconque des revendications 2 à 3, dans lequel le volume d'espace comprend en outre un ou plusieurs objets dynamiques.

6. Agent ML selon la revendication 5, configuré en outre pour obtenir des troisièmes données d'entraînement et, lorsque le modèle ML a satisfait le second critère de performance, pour entraîner le modèle ML dans une troisième étape d'entraînement à l'aide des troisièmes données d'entraînement, l'agent ML étant configuré dans la troisième étape d'entraînement pour modéliser un déploiement statique d'émetteurs-récepteurs dans le volume d'espace comprenant un ou plusieurs objets dynamiques.

7. Agent ML selon l'une quelconque des revendications 5 et 6, configuré en outre pour obtenir des quatrièmes données d'entraînement et, lorsque le modèle ML a satisfait le second critère de performance, pour entraîner le modèle ML dans une quatrième étape d'entraînement à l'aide des quatrièmes données d'entraînement, l'agent ML étant configuré dans la quatrième étape d'entraînement pour modéliser un déploiement dynamique d'émetteurs-récepteurs dans le volume d'espace comprenant un ou plusieurs objets dynamiques.

8. Agent ML selon la revendication 7, configuré pour entraîner le modèle ML à la fois dans la troisième étape d'entraînement et dans la quatrième étape d'entraînement, et configuré en outre pour terminer la troisième étape d'entraînement et commencer la quatrième étape d'entraînement lorsque le modèle ML satisfait un troisième critère de performance.

9. Agent ML selon l'une quelconque des revendications 2 à 8, dans lequel le volume d'espace comprend l'intérieur d'un bâtiment.

10. Agent ML selon la revendication 9, dans lequel l'intérieur du bâtiment est un espace d'usine et les objets comprennent des équipements industriels, ou dans lequel l'intérieur du bâtiment est une installation médicale et les objets comprennent des équipements médicaux, ou dans lequel l'intérieur du bâtiment est un espace de bureau et les objets comprennent des équipements de bureau.

11. Agent ML selon l'une quelconque des revendications 9 et 10, dans lequel les émetteurs-récepteurs doivent être déployés dans une configuration de déploiement sensiblement plane qui est située plus loin du centre de la terre que le volume de l'espace.

12. Agent ML selon l'une quelconque des revendications 2 à 11, configuré en outre pour utiliser l'apprentissage par renforcement, RL, dans l'entraînement du modèle ML.

13. Agent ML selon la revendication 12, configuré en outre pour utiliser des valeurs de fonction de récompense RL lors de la détermination si au moins un critère de performance est satisfait.

14. Agent ML selon la revendication 13, configuré en outre pour déterminer les valeurs de la fonction de récompense RL en utilisant au moins l'un des éléments suivants :
un niveau de couverture estimé des émetteurs-récepteurs à travers le volume d'espace ;
un certain nombre d'émetteurs-récepteurs utilisés ;
un volume total estimé dans le volume de l'espace dans lequel la couverture est inférieure à un niveau de seuil prédéterminé ; et
une durée moyenne entre les mouvements des émetteurs-récepteurs lorsque le déploiement dynamique est utilisé.

15. Agent ML selon l'une quelconque des revendications 2 à 14, dans lequel :
les émetteurs-récepteurs sont des émetteurs-récepteurs radio du projet de partenariat de 3e génération, 3GPP, 5e génération, 5G, et la capacité de connexion au réseau est une capacité de connexion au réseau 5G ; ou
les émetteurs-récepteurs sont des émetteurs-récepteurs WiFi conformes à la norme 802.11 de l'Instit d'ingénieurs électriciens and électroniciens, IEEE, et la capacité de connexion réseau est une capacité de connexion au réseau WiFi ; ou
les émetteurs-récepteurs sont des émetteurs-récepteurs radio du projet de partenariat de 3e génération, 3GPP, 6e génération, 6G, et la capacité de connexion réseau est une capacité de connexion au réseau 6G.
